# EUROPÄISCHE PATENTANMELDUNG

(11) **EP 2 987 777 A1**
(43) Veröffentlichungstag der Anmeldung: **24.02.2016**
(21) Anmeldenummer: 15002408.1
(22) Anmeldetag: 13.08.2015
(51) Int. Cl.: C04B 28/02, C09D 1/02, C04B 41/50, E04G 23/02

(54) **SANIERUNG VON MIT PILZEN UND/ODER ALGEN BEFALLENEN GEBÄUDEFASSADEN**

(30) Priorität: 20.08.2014 DE 102014012190
(71) Anmelder: Saint-Gobain Weber GmbH, 40549 Düsseldorf (DE)
(72) Erfinder: REISCH, Bruno, 79098 Freiburg (DE); RIECKBORN, Timo, 79238 Ehrenkirchen-Norsingen (DE); HENRICHS, Jan, 462424 Boltrop (DE)
(74) Vertreter: Börjes-Pestalozza, Henrich

(57) **Zusammenfassung**

Verfahren zur Sanierung einer verputzten, von Pilzen und/oder Algen befallenen Gebaudefassade, welches einen Reinigungsschritt zur weitgehenden Beseitigung der Algen und/oder Pilze beinhaltet, dadurch gekennzeichnet, dass in einem weiteren Schritt ein alkalischer Putzmörtel, der keine Biozide enthält, vorzugsweise mit einem pH-wert von 8,5 oder höher, zum Abtöten oder Schwächen bei der Reinigung nicht entfernter Algen und/oder Pilze aufgetragen wird, gegebenenfalls gefolgt von ein oder mehreren weiteren Beschichtungen, sowie verwendung eines alkalischen (mineralischen oder pastösen) Putzmörtels zur Abtötung oder Schwächung nach einem (z.B. Hochdruck-) Reinigungsschritt bei einer Fassadensanierung noch vorhandener Reste von Pilzen und/oder Algen. Verwendung des alkalischen Mörtel zum Abtöten oder Schwächen nach einem Reinigungsschritt noch vorhandener Reste von Pilzen und/oder Algen.

## Beschreibung

Die Erfindung betrifft ein neues Verfahren zum Sanieren von Fassaden von Gebäuden, insbesondere solchen mit Wärmedämmverbundsystemen (WVDS) unter Verwendung von alkalischen pastösen oder mineralischen Putzmörtelsystemen sowie entsprechende Verwendungen.

Allgemein kommt es auf Fassaden von Gebäuden innerhalb weniger Jahre zu Bewuchs mit Pilzen und Algen. In unseren Breitengraden treten solche Fälle immer häufiger auf. Veränderte Klima- und Umweltbedingungen bieten immer bessere Voraussetzungen für das Wachstum von Algen und Pilzen. Auch manche Details moderner Architektur begünstigen das Wachstum.

Die Forderung nach einer erhöhten Energieeffizienz von Gebäude mit dem Ziel, die Emissionen klimaschädigender Treibhausgase wie Kohlendioxid stärker zu vermeiden, führt zu einer stetig steigenden Dämmstoffdicke, insbesondere auch bei Wärmedämmverbundsystemen. Dabei machen sich jedoch Probleme beispielsweise in Form einer dadurch reduzierten Wärmeübertragung aus dem Gebäudeinneren bemerkbar, die sich in einer verringerten Verdunstung von Feuchtigkeit auf den Außenseiten und damit verlängerten Trocknungszeiten äußern. Die so länger auf den Flächen verbleibende Feuchtigkeit bietet Pilzen und Bakterien sowie Algen verbesserte Wachstumsbedingungen. Die Algen- und Schimmelbildung auf Fassaden wird somit beträchtlich erhöht.

Wärmedämmverbundsysteme sind mehrschichtig aufgebaut. Auf das - meist auf das Wandsubstrat geklebte oder mit Dübeln befestigte - Dämmaterial folgt eine gegebenenfalls armierungsverstärkte Unterputzschicht, darauf eine Oberputzschichten und gegebenenfalls noch Deckschichten, insbesondere Farbanstriche. In seltenen Fällen können Unterputz und/oder Oberputz auch jeweils mehrschichtig ausgeführt sein.

Im Sinne dieser Anmeldung umfasst der Begriff Putz bzw. Putzmörtel auch die praxisbekannten Spachtelmassen.

Um die Bildung von Schimmel und Algenbewuchs allgemein bei Fassaden und insbesondere bei WVDS zu verhindern, wurden unterschiedliche Lösungsansätze verfolgt:
Zum einen wurde versucht, biozide Schichten auf Fassaden aufzustreichen, doch hat die Verwendung von Bioziden den Nachteil, dass diese oft nicht sehr haltbar sind und überdies von Regen etc. ausgewaschen und so dem Boden und Grundwasser sowie der Kanalisation zugeführt werden, was zu einer unerwünschten Umweltbelastung führt.

Andere Methoden wie das Aufbringen von hydrophoben Schichten zur Beschleunigung des Abfließens von Tau- und Regenwasser, das Streichen der Fassaden in dunklen Farben zur Verstärkung der Erwärmung durch Sonneneinstrahlung, das Aufstreichen von Schichten mit Lotus-Effekt oder das Auftragen von hydrophilen Schichten auf Fassaden, die Wasser aufsaugen und so den Mikroorganismen entziehen, haben sich in der Praxis aus verschiedenen Gründen nicht hinreichend bewährt.

Doch trotz all dieser Vorsichtsmaßnahmen kommt es immer nach wenigen - beispielsweise rund 6 bis 10 Jahren - zu sichtbarem und störendem Bewuchs der Außenseiten von Fassaden mit Mikroorganismen wie Algen und Pilzen. Dann ist eine Sanierung erforderlich.

Diese wird nach dem Stand der Technik durchgeführt, indem erst die Fassade weitestgehend beschädigungsfrei gereinigt und dann mit einem Biozid behandelt wird. Das heißt, auf ein Reinigen der Fassade, in der Regel mit Hochdruckreinigern, folgt anschließend der Auftrag eines "Biozidgrundes", um die verbliebenen Mikroorganismen abzutöten, schließlich z.B. eine über das normale Maß mit Bioziden ausgerüstete neue Fassadenfarbe, um einen erneuten Befall der als kritisch gefundenen Fassade sicher zu vermeiden.

Die PCT-Anmeldung WO 2007/087509 A1 beschreibt allgemein die Verwendung alkalischer Mineralputze bei noch nicht befallenen Zementen und ohne Bezugnahme z.B. auf die Sanierung, auch ohne Bezugnahme auf WVDS, zur Verhinderung des Wachsens von Pilzen auf der Oberfläche eines zementhaltigen Materials. Die WO 2005/111158 A1 beschreibt die Anwendung von stark basischen Agentien zum Einstellen eines pH-Wertes von mindestens 10 zur Konservierung von Beschichtungsmitteln auf Basis von Vinylester-Copolymeren.

Aufgabe der Erfindung ist, vor diesem Hintergrund eine neue Methodik zur Sanierung durch Pilze und/oder Algen und gegebenenfalls anderen Mikroorganismen befallener Fassaden von Gebäuden, insbesondere von WVDS, bereitzustellen, die es ermöglicht, den Einsatz von Bioziden zu vermeiden und dennoch einen ausreichenden Schutz für Fassaden vor erneutem Befall mit Algen und/oder Pilzen zu erzielen.

Es wurde überraschend gefunden, dass es möglich ist, auf den Einsatz von Bioziden zu verzichten und trotzdem mindestens vergleichbaren schutz gegen Wachstum von Pilzen, Algen oder anderen Mikroorganismen, oder zwei oder mehr davon (was hier und nachfolgend stets "zwei oder mehr der genannten Organismen" bedeutet) auf Fassaden zu erzielen, indem ein Abtöten oder mindestens Schwächen der nach einer Fassadenreinigung beispielsweise mittels Hochdruckreinigung noch vorhandenen Reste von Algen- und Pilzrückständen mittels eines alkalischen Beschichtungsmittels, das vorzugsweise einen pH von 8,5 oder höher hat, insbesondere von 10 oder höher, beispielsweise von 10 bis 13 erfolgt. Die überraschend gute Wirkung basiert dabei neben einer möglichen langfristigen Abwehr einer erneuten Besiedlung auf der Unterdrückung durch Schwächung oder Tötung noch vorhandener Reste von Algen- und Pilzbeständen.

Die Erfindung betrifft daher in einer ersten Ausführungsform ein Verfahren zur Sanierung einer verputzten, von Pilzen, Algen oder anderen Mikroorganismen, oder von zwei oder mehr davon, befallenen Gebäudefassade, insbesondere eines von Pilzen, Algen oder anderen Mikroorganismen, oder von zwei oder mehr davon, befallenen Wärmeverbundsystems (WVDS), welches einen Reinigungsschritt zur weitgehenden Beseitigung der Algen, Pilze und/oder Mikroorganismen beinhaltet, dadurch gekennzeichnet, dass in einem weiteren Schritt ein alkalischer Putzmörtel zum Abtöten oder schwächen bei der Reinigung nicht entfernter Algen, Pilze und/oder anderen Mikroorganismen aufgetragen wird, gegebenenfalls gefolgt von ein oder mehreren weiteren Beschichtungen.

Überraschend wurde gefunden, dass alleine die Verwendung des alkalischen Putzmörtels ohne Biozide eine mindestens vergleichbare, wenn nicht bessere, Verzögerung einer erneuten Besiedelung der behandelten Flächen ermöglicht wie die Behandlung mit biozidhaltigen Mitteln. Die Verzögerung erneuten Wachstums beruht dabei vor allem auf einer Abtötung oder Schwächung der nach Hochdruckreinigung noch vorhandenen Pilze, Algen oder anderer Mikroorganismen ("Nester") durch den alkalischen Putzmörtel.

In einer weiteren Ausführungsform betrifft die Erfindung die Verwendung eines alkalischen (mineralischen oder pastösen) Putzmörtels (insbesondere mit einem pH-Wert wie vor- und nachstehend beschrieben) bei der Sanierung einer verputzten, von Pilzen oder Algen oder anderen Mikroorganismen, oder von zwei oder mehr davon, befallenen Gebäudefassaden, insbesondere eines von Pilzen und/oder Algen befallenen WVDS zur Abtötung oder Schwächung nach einem Reinigungsschritt, insbesondere einer Hochdruckreinigung, noch vorhandener Reste von Pilzen, Algen und/oder Mikroorganismen. Vorzugsweise erfolgt die Verwendung mittels eines der vor- und nachstehend genannten Verfahren.

Als alkalischer Putz kann dabei ein Putz mit einem pH-wert von 8,5 oder höher, insbesondere von 9 oder höher, z.B. von 10 oder höher, beispielsweise von 10 bis 13, Verwendung finden. Der pH-Wert wird dabei nach Zugabe von 10 Teilen Putzmörtel zu 90 Teilen pH 7-Wasser unter Rühren nach 5 Minuten mit einer pH-Elektrode bestimmt.

Der alkalische Putz kann dabei ein mineralischer und/oder ein pastöser (organischer Dispersions-) Putz sein.

Bevorzugt erfolgt zunächst eine Hochdruckreinigung, anschließend eine Beschichtung mit einem alkalischen Putzmörtel.

Nachfolgend werden für die erfindungsgemäße Verwendung bevorzugte mineralische und pastöse Putze angegeben, die neben der adhesiven Basiskomponente weitere Füll- und Hilfsstoffe enthalten können.

Generalisierte bevorzugte Zusammensetzungen von mineralischen Unter- und/oder Oberputzen beinhalten insbesondere (die Prozentangaben beziehen sich auf die jeweilige Trockenmischung):
Hydraulisch aushärtbare Materialien, insbesondere Zement, z.B. Weißzement, wie CEM I 42,5 R, Grauzement, z.B. CEM II 32,5 A-LL, bevorzugt in einem Gewichtsanteil von 2 bis 50 Gew.%, besonders bevorzugt von 5 bis 20 Gew.%;
Kalkstein-, Kalkstein-Marmormehl, Marmorkörnungen, Weißkalkhydrat, Feinkalkstein oder Kalksteingrieß oder Mischungen von zwei oder mehr davon, bevorzugt in einem Gewichtsanteil von insgesamt 5 bis 80 Gew.%;
Füllstoffe, wie Sand, z.B. Quarzsand, Calciumcarbonat, Dolomit, bevorzugt in einem Anteil von 0,1 bis 20 Gew.-%,
gegebenenfalls mit ein oder mehreren Zusätzen ausgewählt aus der Gruppe, die
Dispersionspulver (z.B. Vinylacetat/Ethylenbasiert), z.B. in einem Gewichtsanteil von 0 bis 3 Gew.-%,
Hydrophobierungsmittel (z.B. ein oder mehr ausgewählt aus zinkstearat, Seifen von langkettigen Säuren, wie Ölsäure, ) z.B. in einem Anteil von 0,01 bis 5 Gew.-%,
Pigmenten, z.B. ein oder mehr ausgewählt aus Anatase- oder Rutilpigmenten, Titandioxidpigmenten, Zinksulfidpigmenten, Glimmer, Alupulver, Ultramarinblaupigment, Muscovit, Aluminium-zirkonoxiden, z.B. in einem Anteil von 0,01 bis 5 Gew.-%,
Stärkeethern, beispielsweise in einem Anteil von 0,005 bis 1 Gew.-%,
Zellulose-(auch als Faser) oder Zellulosederivaten, wie mindestens eins ausgewählt aus cellulosefaser, Methylcellulose, Hydroxyethylcellulose und Methylhydroxyethylcellulose, beispielsweise in einen Anteil von 0,01 bis 2 Gew.-%, Additiven, wie z.B. Detergentien (Surfactans), z.B. ein anionisch-basisches Surfactant,
Rheologiehilfsmittel, wie Phyllosilikate, z.B. auf bentonitbasis, z.B. in einem Anteil von 0,01 bis 1 Gew.-%, Puzzolanartige Bestandteile, wie Zeolithe, z.B. in einem Anteil von 0,1 bis 2 Gew.-%,
EPS-Perlen, z.B. in einem Anteil von 0,1 bis 5 Gew.-%,
Gips, z.B. in einem Anteil von 0,02 bis 3 Gew.-%,
Netz- und Plastifizierungsmittel, beispielsweise in einem Anteil von 0,01 bis 5 Gew.-%
Verzögerer, z.B. in einem Anteil von 0,005 bis 1 Gew.-%, Zinn(II)sulfat, z.B. in einem Anteil von 0,01 bis 0,5 Gew.-%, Lösungsmittel, wie Propylenglykol. Z.B. in einem Anteil von 0,001 bis 0,3 Gew.-%,
Fasern, z.B. aus Polypropylen und/oder Hochmodulfasern, Entschäumern, beispielsweise in einem Anteil von 0,01 bis 1 Gew.-%, und
Blähperliten oder Blähglas, z.B. in einem Anteil von 1 bis 10 Gew.-%,
beinhaltet.

Generalisierte Zusammensetzungen von pastösen (Unter- und Ober-) Putzen sind insbesondere solche, die folgendes beinhalten (die Prozentangaben beziehen sich hier auf die vollständigen wässrigen Dispersionen):
wässrige Dispersionen von organischen Polymeren, wie solche auf natürlicher oder insbesondere künstlicher Latexbasis, z.B. mit Polymeren auf Acrylatbasis, Styrol/Acrylatbasis, auf vinylacetat-Ethylenbasis, auf Styrol-Butadienbasis, auf Vinyl/Acrylatbasis, auf Vinylacetatbasis, oder auf Vinylmaleatbasis, oder Mischungen von zwei oder mehr davon, beispielsweise in einem Anteil von 2 bis 50 Gew.-%, z.B. von 5 bis 20 Gew.-%,
Kalke, insbesondere Kalkstein-, Kalkstein-Marmormehl, Marmorkörnungen, Weißkalkhydrat, Feinkalkstein oder Kalksteingrieß oder Mischungen von zwei oder mehr davon (z.B. in einem Gewichtsanteil von insgesamt 5 bis 80 Gew.%);
gegebenenfalls mit ein oder mehreren weiteren Zusätzen ausgewählt aus
Fasermaterialien, wie Zellulose oder gemahlene Acrylatfasern, z.B. gemahlenes Polyacrylonitril, z.B. in einem Anteil von 0,05 bis 3 Gew.-%,
Dispersionsmitteln oder Stabilisatoren, z.B modifizierte (wie kalzinierte) Diatomeenerde, beispielsweise in einen Anteil von 0,01 bis 5 Gew.-%,
Weichmachern, beispielsweise in einem Anteil von 0,5 bis 10 Gew.-%,
Pigmente, z.B. weiße Pigmente (z.B. wie bei den mineralischen Putzen erwähnt), z.B. in einem Anteil von 0,1 bis 10 Gew.-%, Lösungsmittel, z.B. Ethylenglykol, beispielsweise in einem Anteil von 0,005 bis 1 Gew.-%,
Wasserglas, z.B. Kalium- oder Natriumwasserglas, z.B. in einem Anteil von 0,2 bis 10 Gew.-%,
und gegebenenfalls weitere übliche Zusätze;
wobei insgesamt die Balance mit wasser eingestellt wird.

Solche Komponenten sind z.B. erhältlich von Firmen wie wacker Chemie AG, Schaefer Krusemark, Sachtleben, Tylose GmbH & Co KG, Shinetsu, BASF, Dyckerhoff GmbH, sh minerals GmbH, Hercules Int Ltd. LLC, Peter Greven GmbH & Co KG, Richard Baker Harrison Ltd., ZEOCEM, Cognis, Istein, Giulini, Kemira Pigments Oy, Ziegler & Co GmbH, Eagle Picher Minerals, Inc., Solvadis, Ashland Inc., Henkel KGaA, Lafarge, und anderen bekannten Baustoffliefereanten.

Die Alkalinität erfindungsgemäß zu verwendender Putze (insbesondere Unterputze) kann dabei, falls sie nicht bereits von vorneherein gegeben ist, erforderlichenfalls auf die genannten Werte von 8,5 oder höher (nach dem Anmachen mit Wasser) eingestellt und so die entsprechenden (im Falle der mineralischen Massen trockenen und nassen) alkalischen Puzmörtel werden, indem alkalische Zusätze beigefügt werden, wie Wasserglas (z.B. Natrium- oder Kaliumwasserglas), Alkalioder Erdalkalimetallhydroxide (wie NaOH, KOH oder LiOH), Carbonatsalze, wie solche von Alkali- oder Erdalkalimetallen wie Natrium, Kalium, Lithium, Calcium oder Magnesium, oder Zinkccarbonat, beispielsweise in Gewichtsanteilen von 0,001 bis 5 Gew.-%, bezogen auf die Trockenmasse des alkalischen Zusatzes.

Die Einstellung des (in der angemachten oder gebrauchsfertigen Masse) pH-Wertes kann dabei unter Kontrolle mit pH-Indikatorpapier oder mittels pH-Elektroden erfolgen.

Folgende Varianten des erfindungsgemäßen Verfahrens zur Sanierung von verputzten, von Pilzen befallenen Gebäudefassaden (insbesondere entsprechende WDVS) bzw. der erfindungsgemäßen Verwendung von verputzten, von Pilzen befallenen Gebäudefassaden (insbesondere entsprechende WDVS) zur Abtötung oder Schwächung nach einem Reinigungsschritt noch vorhandener Reste von Pilzen oder Algen bilden spezielle, bevorzugte erfindungsgemäße Ausführungsformen:
1) Mineralischer Egalisationsspachtel als alkalischer Putz(mörtel), beispielsweise weber.therm^{®} 300, weber.therm^{®} 301, weber.therm^{®} 302, weber.therm^{®} 304 speedy, weber.therm^{®} 304 clean, weber.therm^{®} 305 AB, weber.therm^{®} 307 oder weber.therm^{®} plus ultra), darüber ein mineralischer Oberputz (z.B. der Aqua-Balance-Reihe (AB), wie weber.top^{®} 203 AB, 204 AB, 206 AB, weber.star 220 AB, 223 AB oder 224 AB) oder ein pastöser Oberputz (z.B. ein teilweise hydrophober beispielsweise der Aqua-Balance^{®}-Reihe, wie weber.top^{®} 203 AB, 204 AB, 206 AB, weber.star^{®} 220 AB, 223 AB, 224 AB).
2) Mineralischer Egalisationsspachtel mit (z.B. Glas-) Fasereinlage (insbesondere wenn der Untergrund Risse aufweist) als alkalischer Putz, beispielsweise weber.therm^{®} 300, weber.therm^{®} 301, weber.therm^{®} 302, weber.them^{®} 304 speedy, weber.therm^{®} 304 clean, weber.therm^{®} 305 AB, weber.therm^{®} 307, oder weber.therm^{®} plus ultra, jeweils mit eingelegter Glasfaser, und entweder mineralischer Oberputz, z.B. wie unter 1) genannt, oder ein pastöser Oberputz, z.B. wie unter 1) genannt.
3) Pastöser Egalisationsspachtel mit einem alkalischen pH wie oben und nachstehend angegeben (beispielsweise basierend auf einer Mischung von Wasser, Kali-Wasserglas, einem Topfkonservierer, Additiven zur Verbesserung der Verarbeitbarkeit und der Produzierbarkeit, Polyacrylatdispersion, Sand, Kalksteinmehl, Hyydrophobierungsmittel und gewünscchtenfalls Glasfaser, Leichtfüllstoffen (z.B. Microhohlglaskugeln), Pigment, wie Weißpigment, und Brandschutzmittel) und hierauf pastöser Oberputz (z.B. der Aqua-Balance^{®} Reihe, z.B. weber.pas 430 AB, 431 AB, 460 AB, 461 AB, 480 AB, 481 AB
4) Pastöser Egalisationsspachtel mit einem alkalischen pH mit (z.B. Glas-) Fasereinlage (insbesondere wenn der Untergrund Risse aufweist), beispielsweise wie unter 3) angegeben), jeweils mit eingelegter Glasfaser, und darauf pastöser Oberputz, , wie z.B. unter 3).
5) Direkter Auftrag nur eines erfindungsgemäß alkalischen mineralischen Oberputzes der Aqua-Balance-Reihe auf den gereinigten Untergrund, z.B. weber.top^{®} 203 AB oder 204 AB, oder weber.star^{®} 220 AB, 223 AB oder 224 AB.
6) Direkter Auftrag nur eines erfindungsgemäß alkalischen pastösen Oberputzes, z.B. weber.pas 460 AB oder 461 AB.
7) Zusätzliche Option bei allen varianten 1) bis 6): Auftrag eines Farbanstriches auf dem Oberputz, z.B. aus der Aqua-Balance-Reihe, beispielsweise weber.ton^{®} 411 AB, 414 AB.

Die genannten Markennamen beziehen sich alle auf Produkte der Firma Saint-Gobain weber, doch können auch analoge Putze anderer Unternehmen eingesetzt werden.

In den Ansprüchen finden sich spezielle Ausführungsformen der Erfindung, die hier ebenfalls durch Bezugnahme in die Beschreibung aufgenommen werden.

Das nachfolgende Beispiel dient der Illustration der Erfindung, ohne ihren Umfang einzuschränken.

### Beispiel:

An einem Gebäude wurden im Jahre 2006 zwei Prüfflächen mit Ausrichtung nach Nordwesten unterschiedlich behandelt-Prüffläche 2 nach dem bekannten Verfahren unter Verwendung von Bioziden, Prüffläche 1 nach dem erfindungsgemäßen Verfahren ohne Biozide.

Prüffläche 1: Die Fassade wurde mit Hochdruckreiniger zur oberflächlichen Entfernung von Verunreinigungen unter Vermeiden der Beschädigung der Oberflächenstruktur des vorhandenen Edelputzes kalt nassgereinigt, gegebenfalls unter Zuhilfenahme einer weichen Bürste. Die Fläche wurde sehr gut trocknen gelassen und die weiteren Arbeiten bei trockener Witterung durchgeführt. Auf die gereinigte, trockene Fläche wurde eine Schicht durch einmaliges Auftragen des alkalischen Armierungsmörtels weber.therm 302 (pH-Wert >12,0) in einer Schichtdicke von 5-8 mm aufgebracht.

Prüffläche 2: Nach der aus dem Stand der Technik bekannten Methode wurde die Fassadenfläche mit Hochdruckreiniger zur oberflächlichen Entfernung von Verunreinigungen unter Vermeiden der Beschädigung der Oberflächenstruktur des vorhandenen Edelputzes kalt nassgereinigt, gegebenenfalls unter Zuhilfenahme einer weichen Bürste. Die Fläche wurde sehr gut trocknen gelassen und die weiteren Arbeiten bei trockener Witterung abtrocknen gelassen. Die gereinigte, trockene Fläche wurde durch einmaliges Auftragen mit maxit^{®} Biozidgrund sorgfältig ohne Fehlstellen und Einwirkenlassen sorgfältig behandelt. Sie wurde gut abtrocknen gelassen, anschließend wurde ohne weitere Reinigung bei trockener Witterung eine Schicht mit einer Dicke von 5-8 mm durch einmaliges Auftragen des alkalischen Armierungsmörtels weber.therm 302 (pH-wert >12,0) aufgebracht.

### Auswertung:

Es wurde eine erste Begutachtung nach 2 Jahren (im Jahre 2008), eine weitere nach insgesamt 6,5 Jahren Standzeit (2013) im Freien durchgeführt. Dazu wurden die Flächen visuell begutachtet und mit der Erstbegutachtung nach zwei Jahren Standzeit in 2008 verglichen, um den Befall zu identifizieren und zu quantifizieren.

Der vergleich erfolgte über die Zellzahl pro cm², wobei als Bewuchsgrenze für ein qualitativ hochwertiges Produkt eine Zellzahl von 200.000 pro cm² bei Algen (bis zu dieser Zahl finden sich keine sichtbaren Spots, vereinzelt wenig auffällige Verfärbungen in hellgrün bzw. gräulich - wird nicht als Befall wahrgenommen) bzw. 150.000 pro cm² bei Pilzen. Bei Unterschreiten dieser Zahlenwerte ist ein sichtbarer Befall mit den genannten Organismen nicht gegeben (bzw. die Besiedelung wird nicht als Befall wahrgenommen) und sie werden als befallsfrei eingestuft.

Messmethode: Bei einer Ortsbegehung (Außentemperatur 8 °C, geschlossene wolkendecke) wurde eine visuelle Beurteilung und Probenname in Form kontaminierter Körner vorgenommen. Die zur vermeidung von Rand-/Kanteneffekten aus den Flächenbereichen entnommenen Materialproben wurden anschließend im Rostocker Labor mit dem Epifluoreszenzmikroskop untersucht. Dabei wurde der DNA-Fluoreszenzindikator DAPI (4',6-Diamidino- 2-phenylindol) und zu dessen Anregung UV-Licht verwendet bzw. bei Algen eine Anregung des Chlorophylls mittels grünem Licht vorgenommen. Als Mikroskop findet ein OLYMPUS IX 51-Gerät Verwendung bei 600-facher Vergrößerung und einem Okularmessfenster von 144*110 µm.

Ergebnisse: Die ermittelten Zellzahlen liegen in allen vergleichbaren Flächen deutlich unter der Zellzahl von 200.00 Zellen pro cm² für Algen bzw. 150.000 Zellen pro cm² für Pilze wie aus folgenden Tabellen ersichtlich ist:

| Nach zwei Jahren | | Mittlere Zellzahl pro cm² | |
|---|---|---|---|
| Prüffläche | Probe | Je Probe | Auf Prüffläche gemittelt |
| 1 | A | < 5.000 Algen und Pilze | 5.000 Algen, 8.000 Pilze |
| 1 | B | < 5.000 Algen, 15.000 Pilze | |
| 2 | 1 | < 5.000 Algen und Pilze | 13.000 Algen, 8.000 Pilze |
| 2 | 2 | 13.000 Algen, 11.000 Pilze | |
| 2 | 3 | 21.000 Algen, 7.000 Pilze | |

| Nach 6,5 Jahren | | Mittlere Zellzahl pro cm² | |
|---|---|---|---|
| Prüffläche | Probe | Je Probe | Auf Prüffläche gemittelt |
| 1 | A | < 5.000 Algen | Ca. 5.500 Algen, 38.000 Pilze |
| | (verschmutzte Körner/Spots) | 18.500 Pilze | |
| 1 | B (verschmutzte Körner/Spots) | 6.000 Algen, 57.000 Pilze | |
| | | | |
| 2 | 1 (großer Pilzsspot) | 170.000 Algen | 90.000 Algen, |
| | | 180.000 Pilze | 106.000 Pilze |
| 2 | 2 (leicht verschmutzte Oberfläche/Spots) | 10,000 Algen | |
| | | 31.500 Pilze | |

Somit können die Prüfflächen 1 und 2 auch nach 6,5 Jahren noch als beanstandungsfrei im Sinne der zieldefinition angesehen werden, wobei die Zielvorgabe für Pilze im Fall der Probe 2.1 überschritten ist. Sowohl in 2008 als auch in 2013 lassen sich nur sehr geringe Algenbefälle feststellen. Die Püzbefälle nehmen tendenziell zu, wenngleich die zielvorgaben erfüllt werden. Bei den gefundenen Pilzen handelt es sich überwiegend um sogenannte mikrokoloniale Pilze, welche keine Myzele ausbilden, sondern hefeartig in Klumpen wachsen. Sie werden auch als schwarze Hefen bezeichnet, gelten als ausgesprochen trockenresistent und kommen mit sporadisch auftretenden Feuchtigkeitsmengen aus.

Es zeigt sich, dass tendenziell die mit Biozidgrund vorbehandelten Flächen stärkeres Pilzwachstum zeigen als die nur mit Putzmörtel bestrichenen. Der Schutz auch ohne Biozidgrund ist möglicherweise plausibel darauf zurückzuführen, dass durch den alkalischen Putz die nach der Hochdruckreinigung noch vorhandenen Reste (Nester) von Pilzen und Algen abgetötet bzw. in ihrer Vitalität entscheidend geschwächt werden.

## Patentansprüche

1. Verfahren zur Sanierung einer verputzten, von Pilzen, Algen oder anderen Mikroorganismen, oder zwei oder mehr dieser Organismen, befallenen Gebäudefassade, welches einen Reinigungsschritt zur weitgehenden Beseitigung der Algen und/oder Pilze beinhaltet, **dadurch gekennzeichnet, dass** in einem weiteren Schritt ein alkalischer Putzmörtel, vorzugsweise mit einem pH-Wert von 8,5 oder höher, zum Abtöten oder Schwächen bei der Reinigung nicht entfernter Algen, Pilze oder anderer Mikroorganismen, oder von zwei oder mehr dieser Organismen, aufgetragen wird, gegebenenfalls gefolgt von ein oder mehreren weiteren Beschichtungen.

2. verfahren nach Anspruch 1, bei dem die Fassade ein Wärmeverbundsystem ist.

3. Verfahren nach Anspruch 1 oder 2, wobei es sich bei dem alkalischen Putzmörtel um einen mineralischen Putz handelt.

4. verfahren nach Anspruch 1 oder 2, wobei es sich bei dem alkalischen Putzmörtel um einen pastösen Putz handelt.

5. Verfahren nach einem der Ansprüche 1 oder 2 oder 3, wobei in dem weiteren Schritt in einem ersten Schritt als alkalischer Putzmörtel ein mineralischer Egalisationsspachtel ohne oder mit Fasereinlage und in einem zweiten Schritt darüber ein mineralischer Oberputz oder ein pastöser Oberputz aufgetragen wird.

6. Verfahren nach einem der Ansprüche 1 oder 2 oder 4, wobei in dem weiteren Schritt als alkalischer Putzmörtel in einem ersten Schritt ein pastöser Egalisationsmörtel ohne oder mit Fasereinlage und in einem zweiten Schritt darüber ein mineralischer Oberputz oder ein pastöser Oberputz aufgetragen wird.

7. Verfahren nach einem der Ansprüche 1 oder 2 oder 3, bei dem in dem weiteren Schritt als alkalischer Putzmörtel lediglich ein mineralischer Oberputz aufgetragen wird.

8. verfahren nach einem der Ansprüche 1 oder 2 oder 4, bei dem in dem weiteren Schritt als alkalischer Putzmörtel lediglich ein pastöser Oberputz aufgetragen wird.

9. verfahren nach einem der Ansprüche 1 bis 8, wobei zusätzlich als äußerste Schicht ein Farbanstrich aufgetragen wird.

10. Verfahren nach einem der Ansprüche 1 bis 9, wobei die gegebenenfalls verwendeten Putzmörtel
(i) im Falle der mineralischen Putzmörtel die jeweilige Trockenmischung Hydraulisch aushärtbare Materialien, insbesondere Zement;
Kalke, insbesondere Kalkstein-, Kalkstein-Marmormehl, Marmorkörnungen, weißkalkhydrat, Feinkalkstein oder Kalksteingrieß oder Mischungen von zwei oder mehr davon; sonstige Füllstoffe; und gegebenenfalls ein oder mehrere Zusätze ausgewählt aus der Gruppe, die Dispersionspulver; Hydrophobierungsmittel; Pigmente; Stärkeether; Zellulose-(auch als Faser) oder Zellulosederivate; Additive, wie z.B. Detergentien; Rheologiehilfsmittel; Puzzolanartige Bestandteile; EPS-Perlen; Gips; Netz- und Plastifizierungsmittel; Verzögerer; Zinn(II)sulfat; Lösungsmittel; Fasern; Entschäumern; und
Blähperliten oder Blähglas;
beinhaltet, wobei im Falle der Verwendung oder des Verfahrens Anmachwasser zugefügt wird,
und/oder
(ii) im Falle der pastösen Putzmörtel der jeweilige wässrige Ansatz wässrige Dispersionen von organischen Polymeren; Kalke, insbesondere Kalkstein-, Kalkstein-Marmormehl, Marmorkörnungen, weißkalkhydrat, Feinkalkstein oder Kalksteingrieß oder Mischungen von zwei oder mehr davon; und gegebenenfalls ein oder mehrere weitere Zusätzen ausgewählt aus Fasermaterialien; Dispersionsmitteln oder Stabilisatoren; weichmachern; Pigmenten; Lösungsmitteln; Wasserglas; und gegebenenfalls weiteren üblichen Zusätzen;
wobei insgesamt die Balance mit Wasser eingestellt wird;
wobei erforderlichenfalls die Alkalinität als alkalische Putzmörtel zu verwendender Putze, falls sie nicht bereits von vorneherein gegeben ist, erforderlichenfalls auf einen pH-Wert von 8,5 oder höher eingestellt wird, indem alkalische zusätze beigefügt werden.

11. Verwendung eines alkalischen (mineralischen oder pastösen) Putzmörtels, insbesondere im Rahmen eines Verfahrens nach einem der Ansprüche 1 bis 10, bei der Sanierung einer verputzten, von Pilzen oder Algen befallenen Gebäudefassade, insbesondere eines von Pilzen und/oder Algen befallenen WVDS, zur Abtötung oder Schwächung nach einem Reinigungsschritt noch vorhandener Reste von Pilzen und/oder Algen.
